# EUROPEAN PATENT SPECIFICATION

(11) **EP 2 861 361 B1**
(45) Date of publication and mention of the grant of the patent: **29.05.2019**
(21) Application number: 12727663.2
(22) Date of filing: 15.06.2012
(51) Int. Cl.: B21D 43/22, B65G 61/00

(54) **BLANKING LINE AND METHOD FOR STACKING BLANKS OUTPUTTED FROM A BLANKING SHEAR OR PRESS**
PRODUKTIONSLINIE FÜR ROHLINGE UND VERFAHREN ZUM STAPELN VON ROHLINGEN AUSGEGEBEN AUS EINER STANZSCHERE ODER -PRESSE
LIGNE DE PRODUCTION DES ÉBAUCHES ET PROCÉDÉ POUR EMPILER DES ÉBAUCHES SORTIES DE CISAILLES OU D' UNE PRESSE DE DÉCOUPAGE

(43) Date of publication of application: 22.04.2015
(73) Proprietor: ABB Schweiz AG, 5400 Baden (CH)
(72) Inventor: SEGURA GOLORONS, Marc, E-08205 Sabadell (ES); CASANELLES MOIX, Ramon, E-08173 Sant Cugat Del Vallès (ES)
(74) Representative: ZBM Patents - Zea, Barlocci & Markvardsen
(86) International application number: PCT/EP2012/061414
(87) International publication number: WO 2013/185834

(56) References cited:
- EP-A1- 2 399 850
- EP-B1- 1 320 448
- EP-B1- 2 195 267
- DE-A1- 3 105 696
- US-A1- 2004 240 981
- US-A1- 2006 099 064
- US-A1- 2012 003 073

## Description

The present invention relates to a blanking line according to the preamble of claim 1, which is known from e.g. US 2006/099064, and a method for stacking blanks according to claim 15.

### BACKGROUND ART

In the production of stamped or pressed metal parts, such as for example vehicle parts, presses may be supplied with metal blanks that have previously been cut from a metal coil in a separate blanking line. The blanks may be simple metal sheets of a predetermined length or have trapezoidal shapes (shear cutting by means of a blanking shear), or may present more complex outer shapes, cut-outs, etc. (shape cutting in a blanking press with a cutting die). More recently, also blanks with sawtooth edges may be produced with shears or presses.

Blanks produced in a blanking shear or press must be orderly stacked on stacking pallets, trolleys, carts or similar supports, in order to be later moved away from the stacking line and fed one by one to a press line or simply stored for later use or transportation to another production site. Using two pallets, trolleys or carts to stack the blanks allows continuous operation.

One aspect that must be taken into account in the stacking process is that the production rate of a blanking line is usually very high, particularly with parts of a relatively small size: for example, small blanks such as those having less than 1 m of length can easily achieve a rate of 60 blanks per minute, while blanks around 2-4 m of length can be outputted at a rate of 20 blanks per minute.

Other difficulties related to the stacking process are the variety of blanks of different materials, shapes, weights, output rates, etc. to which the process and system may need to be adapted, and the desired accuracy in the positioning of the blanks on the stacking pallet.

Traditionally the blanks are picked one by one after the outlet of the cutting die or shear and dropped on a stacking pallet by using magnetic and/or vacuum cup conveyor systems.

A blank is picked and hanged from a magnetic or vacuum conveyor system which transports it towards a centering position: here the blank is centered by a centering system and released by the magnetic or vacuum system to fall on a stack, and may need to be guided in this movement by a guiding unit, associated to each particular blank shape, so it reaches the correct position. The table or pallet on which the blanks are stacked is progressively lowered such that the blanks are released from a suitable height, regardless of the number of blanks that is already on the stack.

With such known systems it may be complex at least in some cases to provide the required centering; furthermore, it may be costly and/or time consuming to adapt such systems to a number of different blank sizes, weights, etc. because this adaptation may require significant changes.

EP2399850A discloses a stacking line system used to handle stacking of metal parts. The line includes a conveyor and one or more stacking stations each arranged with a stacking pallet and an industrial robot.

US2006/0099064 discloses an on-the-fly robotic system and method for unloading glass sheets of mixed sizes from a conveyor.

The present invention aims to provide a stacking line system, or stacking blanks issued from a blanking shear or press, in which the above drawbacks are at least partly solved.

### SUMMARY OF THE INVENTION

In a first aspect, the invention provides a blanking line as claimed in claim 1.

The use of industrial robots operable in individual or in joint operating mode provides flexibility to the stacking line, since it can be adapted to a range of blanks of different sizes, weights, and output/transport rates, including blanks that could not be handled by a single robot of reasonable size, power and speed.

Furthermore, the changes that may be needed to adapt the line from one blank to another require less operations and shorter downtimes than in the case of a conventional magnetic or vacuum line, since there is no need to change the robots, and it is enough to adapt the guiding system, that may be very simple or even unnecessary. Some guiding may be required in the case of robots e.g. due to the effect of the air layer under the blank being stacked, that may cause a slight sideways movement when the blank is almost on the stack.

An additional advantage is that industrial robots are suitable to stack the blanks accurately in a simple way. For example it is unnecessary to provide a stacking table or pallet with a vertical movement, since robots may be operated to release each blank at the most suitable height.

By the expression "industrial robot" it is here meant an automatically controlled, reprogrammable, multipurpose, manipulator programmable in three or more axes, which may be either fixed in place or mobile for use in industrial automation applications, as defined by the International Organization for Standardization in ISO 8373.

In a further aspect, the invention provides a method for stacking blanks outputted from a blanking shear or press.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figure 1 is a schematic drawing showing some examples of blank geometries that may be outputted from a blanking shear or press;
Figure 2 is a perspective view of a stacking line system according to an embodiment of the invention, with robots operating in individual mode;
Figure 3 is a perspective view of the stacking line system of figure 1, with robots operating in joint mode,
Figure 4 is a perspective view of a stacking line system according to another embodiment of the invention, with robots operating in individual mode;
Figure 5 is a perspective view of the stacking line system of figure 4, with robots operating in joint mode;
Figure 6 is a perspective view of a stacking line system similar to that of figures 2 and 3, with a different embodiment of transfer unit; and
Figure 7 is a perspective view of a stacking line system similar to that of figures 2 and 3, with a further different embodiment of transfer unit.

### DETAILED DESCRIPTION OF EMBODIMENTS

In a blanking shear or press blanks of rectangular or trapezoidal shape are cut by means of a shear from a metal coil; blanks with more complex shapes may also be formed by means of a contoured blanking die. These blanks are workpieces on which later on further operations may be performed, for instance in a press line. To this end, the blanks outputted from the blanking shear or press are stacked in a stacking line arranged adjacent the blanking shear or press.

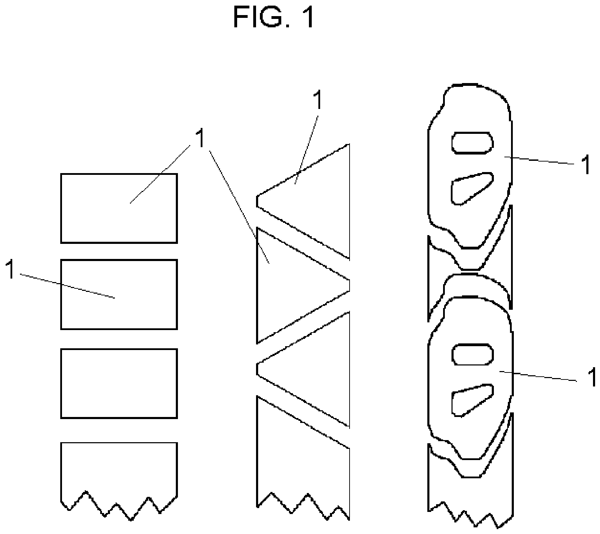

Figure 1 shows by way of example some blanks 1 that may be outputted from a blanking shear or press.

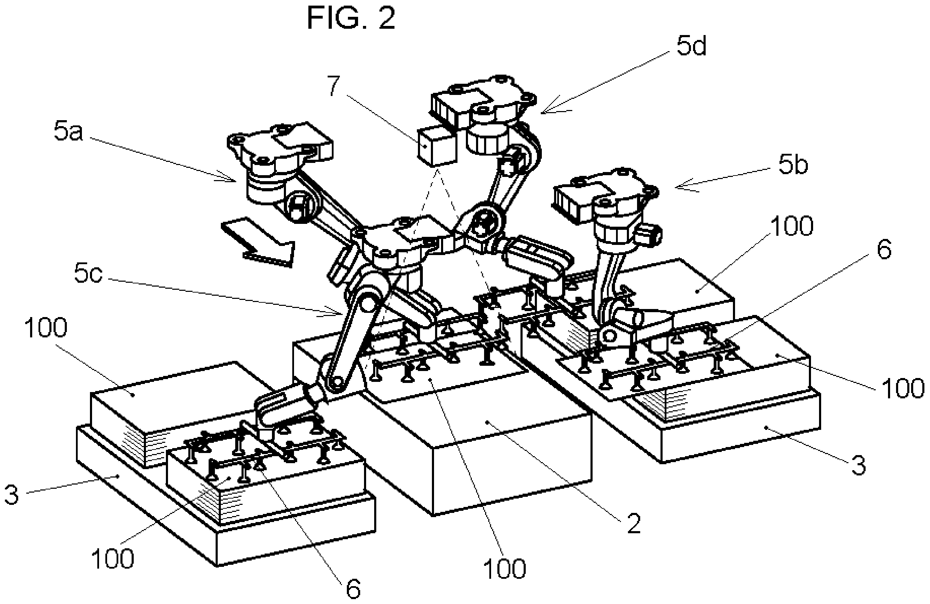

Figure 2 shows a stacking line according to an embodiment of the invention, which may be arranged at the outlet of a blanking shear or press in order to stack the blanks that are outputted from the blanking shear or press on stacking supports.

More particularly, figure 2 shows schematically a transfer unit 2, which receives blanks 100 outputted from the blanking shear or press in the direction of the arrow, and from which industrial robots pick the blanks 100 in order to stack them, as will be described in the following.

The transfer unit 2 may e.g. be a stationary surface as shown in figure 2, where all the blanks are received and then picked in the same position; it may be a linear conveyor arranged to transport the blanks 100 along a transport path, from where they are picked by the robots. Further embodiments of the transfer unit 2 will be disclosed later on.

The system may also comprise stacking supports 3 for stacking blanks thereon, such that they can be later transported to another production line for further handling. The stacking supports 3 are also shown only schematically in the figures, because they may be of any known type.

At each side or above the transport path there may be two industrial robots, in this case two serial robots 5a, 5b, 5c, 5d, each with at least four axes (six rotational axes in figure 2). Each robot carries a tool 6 suitable for handling blanks 100, for example a known vacuum or magnetic tool.

As shown in the figure, the robots may be roof mounted, so as to be a smaller hindrance.

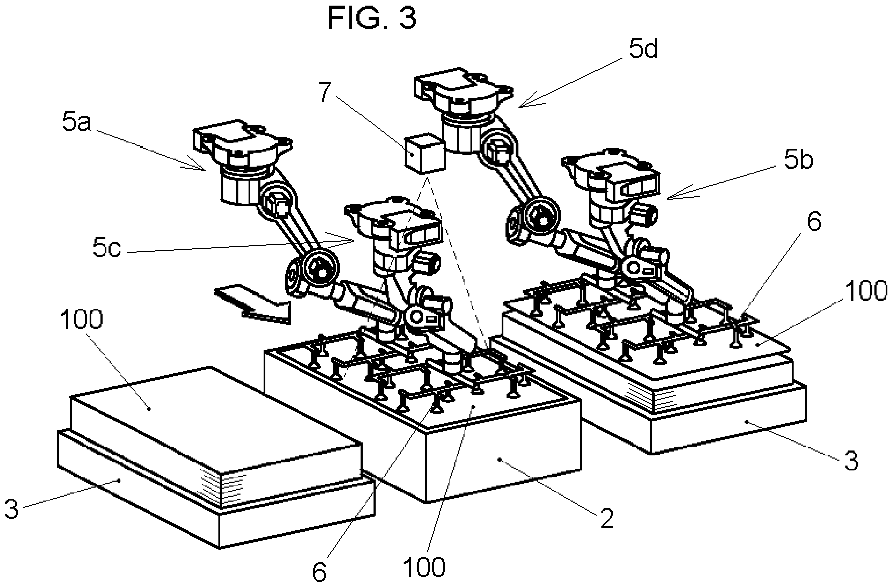

An example of a serial robot that may be employed in a stacking line system such as that of figures 2 and 3 is robot IRB 6620, available from ABB (www.abb.com).

Robots 5a, 5b, 5c and 5d may be controlled by control means (not shown) to each pick a blank 100 from the transfer unit 2 and place it on an associated stacking support 3. This operation of the robots is herein referred to as "individual operating mode".

This may be done in a predetermined sequence, e.g. as shown in figure 2, where:
- robot 5a is picking a blank 100 from the transfer unit 2;
- robot 5b has picked the previous blank 100 and is moving it towards its stacking support 3;
- robot 5c is placing a blank on its associated stacking support 3; and
- robot 5d has placed a blank 100 on its associated stacking support and is returning to pick the next blank.

The position on the transfer unit 2 where a blank is picked may be the same for all the robots 5a, 5b, 5c and 5d, or alternatively there may be different picking positions for different robots, for example if the transfer unit 2 is a linear conveyor.

In association to a picking position on the transfer unit 2 there may be an artificial vision unit 7, connected to the robot control means, such that the precise position of the blank may be known to the control means. This may ensure that each blank is picked from the transfer unit 2 and later placed on a stacking support 3 with the desired accuracy.

The artificial vision 7 unit may be located in the position where the blanks are received from the blanking shear or press; when the transfer unit is a conveyor the system may further comprise known means, such as an encoder associated to the conveyor, to keep control of the position of a blank that advances on the conveyor. Each robot may thus pick up a blank in an appropriate position on the moving conveyor, and there is no need to stop the conveyor.

Figure 3 shows transfer unit 2 and robots 5a, 5b, 5c, 5d in an operating condition which is suitable for larger and/or heavier blanks 200, wherein two robots are controlled by the control means to work jointly.

In this case, as shown in the figure, the pair of robots 5a, 5c on one side of the transfer unit 2, and the pair of robots 5b, 5d on the other side of the transfer unit 2 are controlled jointly, such that each pair of robots act simultaneously on one blank 200 to pick it from the transfer unit 2 and place it on a stacking support 3. This operation where two robots cooperate to move each blank is herein referred to as "joint operating mode".

In figure 3, robots 5a and 5c are picking a blank 200 from the transfer unit 2, while robots 5b and 5d are placing the previously picked blank 200 on a stacking support 3.

Control units that may operate robots jointly are for example those available from ABB (www.abb.com) which include the function MultiMove; MultiMove is a function embedded e.g. into ABB's IRC5 control module, that allows to control the axes of several manipulators such that they work like a single robot.

Examples of operation of the stacking line system are described in the following.

When relatively light and/or small blanks are produced in the blanking shear or press (not shown), for example 20 kg blanks which are outputted at a rate of 60 blanks per minute, the four robots 5a, 5b, 5c, 5d are operated in individual working mode, such that each of them picks and stacks one blank out of four outputted from the blanking shear or press.

This means each robot has to pick and stack 15 blanks each minute, and thus has 4 seconds for each blank. Since 20 kg is a relatively light weight, relatively small and fast robots may be employed in the system, which may be fast enough to work within this cycle time.

When heavier and/or larger blanks are produced in the blanking shear or press, for example 40 kg blanks, the output rate is typically smaller, for example 20 blanks per minute. In this case each pair of robots, i.e. robots 5a, 5b and robots 5c, 5d are operated in joint working mode as show in figure 3, such that each pair picks and stacks one blank out of two outputted from the blanking shear or press.

This means each pair of robots has to pick and stack 10 blanks each minute, and thus has 6 seconds for each blank.

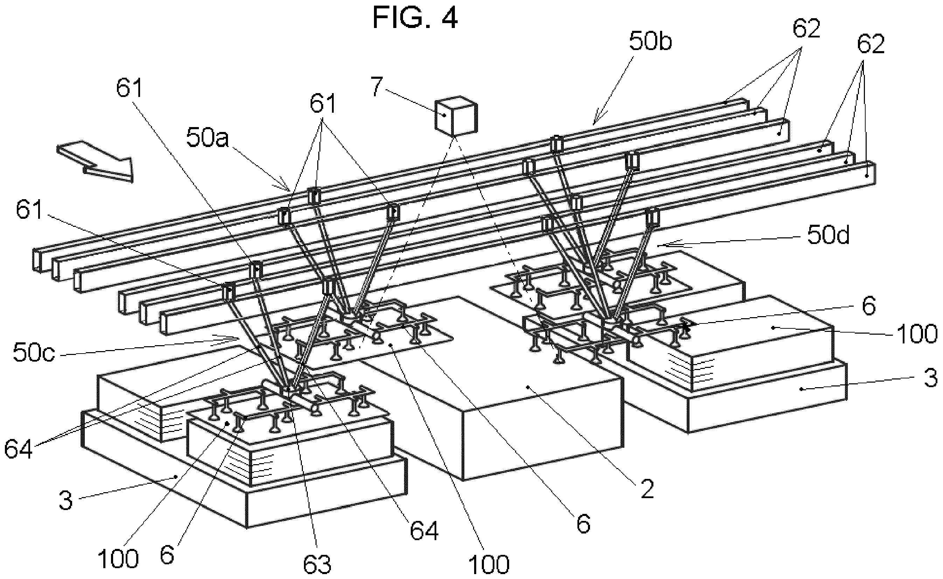

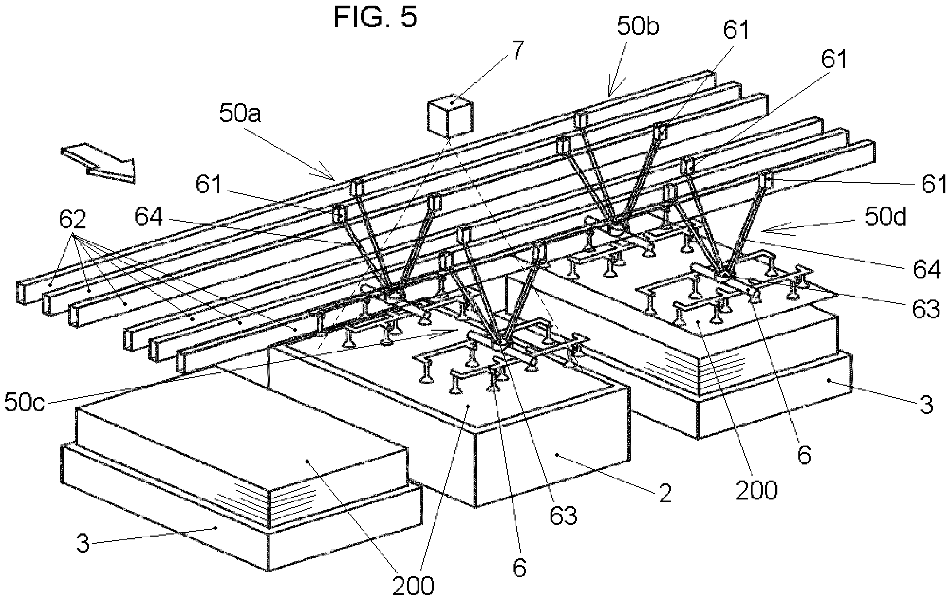

Figures 4 and 5 show schematically another embodiment of a stacking line system; in this case, parallel kinematic manipulators (PKM) are employed as industrial robots, instead of the serial robots of figures 2 and 3. The features that are common to both embodiments have the same reference numerals, and are not described further.

Figure 4 shows four parallel kinematic manipulators (PKM) 50a, 50b, 50c and 50d, working in an individual operating mode in which each PKM picks a blank 100 from the transfer unit 2 and places it on a stacking support 3, in sequence that may be similar to that performed by the serial robots of figure 2.

A parallel kinematic manipulator (PKM) is a low-inertia robot, which con be faster in operation than serial robots.

More particularly, PKMs are manipulators generally comprising a first stationary element, a second movable element and at least three arms. Each arm comprises a first arm part and a second arm part, the latter comprising a link arrangement connected to the movable element. Each first arm part is actuated by a driving means, the driving means being preferably arranged on the stationary element to reduce the moving mass. The link arrangements transfer forces due to actuation of the supporting first arm parts when manipulating the wrist.

This design offers as high degree of load capacity, high stiffness, high natural frequencies and low weight.

As shown for the PKM having reference 50c in figure 4, each manipulator comprises in this example three carriages 61, each sliding with respect to one of three parallel tracks 62, driven by linear motors (not shown); the three carriages 61 are connected to a common wrist mount 63 by means of corresponding links 64, via spherical joints; the tool 6 for handling the blanks is attached to the wrist mount 63.

In this embodiment, the tracks 62 are the stationary element of the PKM, the wrist mount 63 is the movable element, and the carriages 61 and links 64 constitute respectively the two parts of the arms of the PKM.

It will be appreciated that by varying the position of the carriages 61 along their corresponding tracks, the wrist mount 63 may be displaced to a variety of positions in a fast and reliable way.

It has to be noted that in figures 4 and 5 the PKMs are shown only very schematically; the structure, details and operating parameters of PKMs are known to the skilled man, who will be able to employ PKMs with the most suitable features for any particular application. For example, the links 64 of each PKM may be single, double, triple, ... or a combination thereof; similarly, the layout of the tracks 62 may be decided on the basis of the positions that the wrist 63 needs to adopt and the space available in each particular application. The three tracks 62 of a PKM are parallel, but they don't need to be coplanar; they may also be arranged vertically, if suitable to the layout of the system.

In individual operating mode, the PKMs 50a to 50d follow a predetermined sequence in which, for example, as shown in figure 4:
- PKM 50a is picking a blank 100 from the transfer unit 2;
- PKM 50b has picked the previous blank 100 and is moving it towards its stacking support 3;
- PKM 50c is placing a blank on its associated stacking support 3; and
- PKM 50d has placed a blank 100 on its associated stacking support and is returning towards the transfer unit 2 to pick the next blank.

Like in the embodiment with serial robots, all the PKMs 50a, 50b, 50c and 50d may be pick up blanks in the same position on the transfer unit 2, or in different picking positions.

The robots of figure 4 may also operate in joint operating mode, as shown in figure 5: the pair of robots 5a, 5c on one side of the transfer unit 2, and the pair of robots 5b, 5d on the other side of the transfer unit 2 are controlled jointly, such that each pair of robots act simultaneously on one blank 200 to pick it from the transfer unit 2 and place it on a stacking support 3. In the figure, robots 5a and 5c are picking a blank 200 from the transfer unit 2, while robots 5b and 5d are placing the previously picked blank 200 on a stacking support 3.

It should be noted that the PKM robots shown in figures 4 and 5 may be replaced by any other suitable kind of PKMs; for example, they may be of the type disclosed for example in document WO03/066289, which have a first stationary element with one or more axes, and three or more arms. Each arm has a first arm part that rotates around one of said axes driven by a rotary motor, and a link connected between the first arm part and a wrist mount constituting the second moveable element.

This kind or PKM can also be roof mounted, with its main axis vertical or horizontal, as convenient is each particular case.

In both linear PKMs such as those of figures 4-5 and rotational PKMs such as those of WO03/066289, the wrist mount may further include a degree of liberty of rotation and a corresponding actuator.

In the embodiments of figures 2 and 3, for example, there are two robots arranged on each side of the transfer unit; however, in other embodiments, roof-mounted robots may be arranged above a blank transport path, substantially aligned with the transport path.

For example, when the transfer unit is a conveyor, four aligned robots may be arranged above the conveyor, such that in joint operating mode the first two robots in the transport direction operate together to pick a blank, and the third and fourth robots operate together to pick a blank.

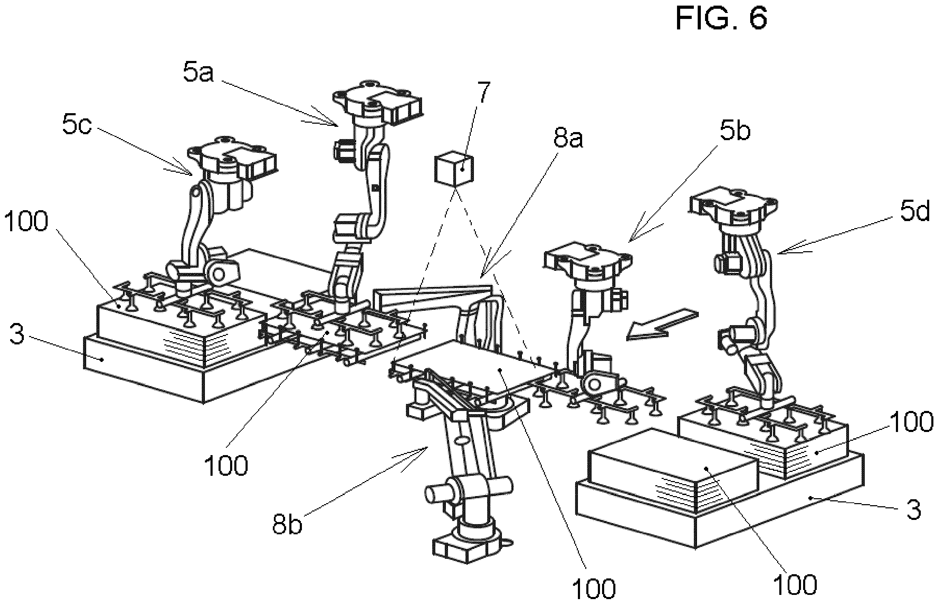

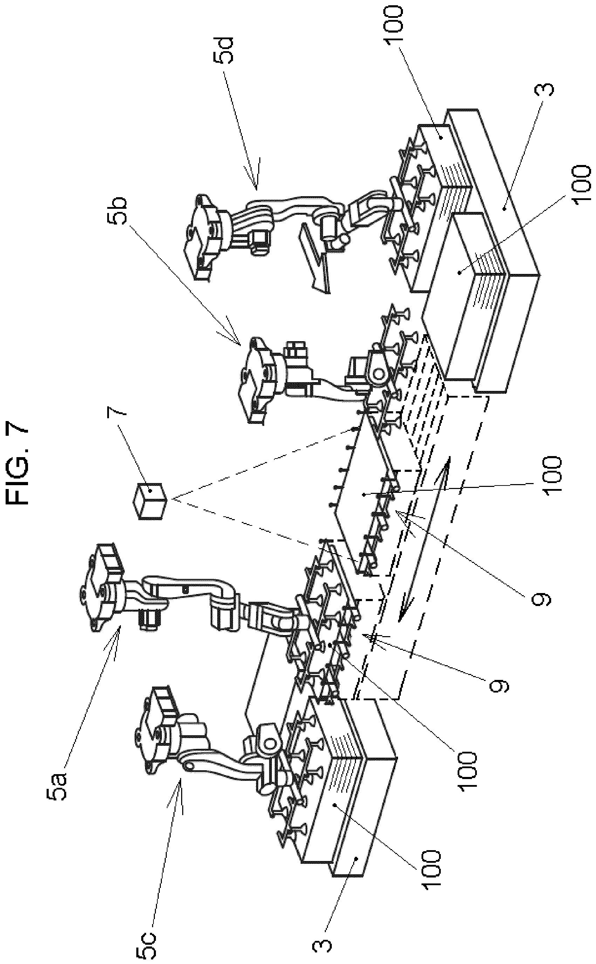

The arrangement of the robots above a transport path may leave more space for the stacking supports on the sides of the transport path, such that it may be easier to arrange two stacking supports for each robot or group of robots. Figures 6 and 7 show two further embodiments of the transfer unit 2, applied to a stacking system that employs serial robots such as those of figures 2 and 3.

In figure 6, instead of a stationary surface or a linear conveyor, the transfer unit 2 comprises two receiving robots 8a and 8b, such as for example 4-axes or 6-axes serial robots.

Each receiving robot 8a, 8b can move from a central, common reception position, where it receives a blank 100 outputted from the blanking shear or press, to a lateral delivery position: robot 8a is shown in the figure in its delivery position, while robot 8b is shown in the common reception position. The reception position for robot 8b is on the right of the figure with respect to this reception position.

As can be seen, the delivery positions of the two receiving robots 8a and 8b are different: robot 8a delivers a blank 100 in a position next to robots 5a and 5c, such that one of these robots (or both of them when working in joint mode) can pick it from the receiving robot 8a and place it on a stacking support 3, while robot 8b delivers the blank in a position next to robots 5b and 5d, on the other side of the stacking system.

In other embodiments, it may be foreseen that for example receiving robot 8a delivers blanks in two different positions, each associated to one of robots 5a and 5c, when the robots are working in individual mode. In some embodiments it may also be foreseen that in case of joint operating mode the two robots 8a and 8b work jointly to deliver one blank to the pair of robots 5a and 5c, and the following blank to the pair of robots 5b and 5d.

More generally, at least one receiving robot may be arranged to move from a reception position to at least one delivery position where one of the industrial robots, or a group of the industrial robots, picks the blank; the receiving robot may move to different delivery positions for different robots or groups of robots.

Commercial products that could be employed as receiving robot in such an embodiment are robots IRB 460 or IRB 660, available from ABB (www.abb.com).

In the alternative embodiment of figure 7, which shows a stacking system similar to those of figures 2, 3 and 6, the transfer unit 2 comprises a shuttle 9 which can reciprocate between a central reception position, where it receives a blank outputted from the blanking shear or press, and at least two different delivery positions, on either side of the central position; the industrial robots 5a, 5b, 5c, 5d, working in individual mode or in joint mode, pick the blank from the shuttle in one of the delivery positions.

Figure 7 shows shuttle 9 both in the receiving position and in one of the delivery positions, and is depicted only very schematically.

In other embodiments the transfer unit may comprise two shuttles, such as shuttle 9 of figure 7, each travelling between a common central reception position, where they receive blanks issued from the blanking shear or cutting die, and two different delivery positions; one shuttle would serve robots 5a and 5c and the other would serve robots 5b and 5d.

In embodiments of the invention, the shuttle or shuttles may be rotating units instead of linear units as in figure 7; in this case, each shuttle would rotate between a common reception position and one delivery position, if two rotating shuttles are employed, or alternatively a single shuttle would rotate between a reception position and two different delivery positions.

In another embodiment of the transfer unit, a shuttle with a dimension that is suitable for two blanks may be provided, and may move, e.g. reciprocate or rotate, between two positions, such that in each of said two positions one blank is received on the shuttle while another blank is picked from the shuttle by a robot or group of robots. That is, in a first position the right side of the shuttle is in a receiving position where it receives a blank, while the left side is in a delivery position where a robot may pick a blank that was previously placed thereon; in a second position the right side of the shuttle has moved to a delivery position to deliver said received blank, while the left side has reached the receiving position to receive a new blank.

According to embodiments of the invention, a method for stacking blanks outputted from a blanking shear or press may comprise providing at least two industrial robots such as those disclosed above, and suitable control means to operate the robots to pick blanks outputted from the line and place them on stacks; depending on a parameter related to the size of the blanks, the weight of the blanks, the transport rate of the blanks along a transport path, and/or a combination thereof, the industrial robots may be operated in an individual operating mode or in a joint operating mode as described above.

For example, the control may operate the robots in joint operating mode if a parameter such as the size of the blanks exceeds a preset value.

The control means may operate the robots or groups of robots in a predetermined sequence, such that all the blanks are picked from the transfer unit by the robots according to a predetermined in sequence.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. The scope of the present invention should not be limited by particular embodiments, but should be determined only by a fair reading of the claims that follow.

## Claims

1. A blanking line, comprising a stacking line system for stacking the blanks that are outputted from the blanking line, wherein the line outputs a plurality of blanks of the same size, one following the other, at an output rate, said stacking line system comprising
• a transfer unit (2) for receiving blanks (1) outputted from the line;
• at least one stacking support (3) for stacking blanks thereon; and
• at least two industrial robots (5a, 5b, 5c, 5d),
• said robots (5a, 5b, 5c, 5d) are arranged with respect to the transfer unit (2) such that they are operable in at least
• an individual operating mode in which each robot picks a blank from the transfer unit (2) in order to place it on a stacking support (3), and
• a joint operating mode in which a group of at least two of said robots act simultaneously on one and the same blank, to pick it from the transfer unit (2) in order to place it on a stacking support (3),
• and said stacking line system comprises robot control means adapted to operate the industrial robots (5a, 5b, 5c, 5d) either in individual operating mode or in joint operating mode for all the blanks of the plurality of blanks of the same size outputted one following the other, depending on a parameter related to the size of the blanks of the plurality of blanks, the weight of the blanks of the plurality of blanks, the cutput rate of the blanks of the plurality of blanks from the blanking line, and/or a combination thereof,
**characterized in that** the blanking line comprises a blanking shear or press for cutting metal from a coil and the stacking line system is arranged adjacent to and at the outlet from the blanking shear or press.

2. A blanking line as claimed in claim 1, wherein at least part of the industrial robots (5a, 5b, 5c, 5d) comprise parallel kinematic manipulators each comprising a first stationary element, a second movable element and at least three arms, each arm comprising a first arm part actuated by a driving means and a second arm part, the latter comprising a link arrangement connected to the movable element.

3. A blanking line as claimed in claim 2, wherein in at least part of the parallel kinematic manipulators the first stationary element comprises parallel tracks (62) and the second movable element comprises a wrist mount (63), each arm comprising a carriage displaceable along one of the tracks and a link connected between the carriage and the wrist mount (63).

4. A blanking line as claimed in claims 2 or 3, wherein in at least part of the parallel kinematic manipulators the first stationary element comprises at least one axis and the second movable element comprises a wrist mount (63), each arm comprising a first arm part rotatable around an axis of the first stationary element and a link connected between the first arm part and the wrist mount (63).

5. A blanking line as claimed in any of the preceding claims, wherein at least part of the robots are roof-mounted and arranged substantially above the transfer unit (2), and wherein the transfer unit (2) transports the blanks from a reception position along a transport path, the robots being arranged above said transport path, substantially aligned therewith.

6. A blanking line as claimed in any of claims 1 to 5, comprising at least four industrial robots, at least two arranged on one side of the transfer unit (2) and at least two arranged on the other side of the transfer unit (2), wherein a pair of robots on the same side of the transfer unit (2) are operable together in joint operating mode.

7. A blanking line as claimed in any of the preceding claims, comprising two stacking supports associated to each robot when said robots are set to operate in individual operating mode, the robots and stacking supports being arranged such that each robot is able to place blanks on either of its two associated stacking supports.

8. A blanking line as claimed in any of claims 1 to 6, comprising two stacking supports shared by at least two robots when said robots are set to operate in individual operating mode, such that each robot is able to place blanks on both stacking supports.

9. A blanking line as claimed in any of the preceding claims, comprising two stacking supports associated to each group of robots when said robots are set to operate in joint operating mode, the robots and stacking supports being arranged such that each group of robots is able to place blanks on either of its two associated stacking supports.

10. A blanking line as claimed in any of the preceding claims, wherein the transfer unit (2) comprises a linear conveyor arranged to transport the blanks along a transport path such that each of the industrial robots, or each group of the industrial robots, picks the blank from the linear conveyor at a position along the transport path, in order to place it on a stacking support.

11. A blanking line as claimed in any of the preceding claims, wherein the transfer unit (2) comprises a stationary surface.

12. A blanking line as claimed in any of the preceding claims, wherein the transfer unit (2) comprises two receiving robots, each receiving robot being arranged to move from a common reception position where it receives a blank from the blanking shear or press, to at least one delivery position where one of the industrial robots, or a group of the industrial robots, picks the blank from the receiving robot in order to place it on a stacking support, the delivery positions of the two receiving robots being different.

13. A blanking line as claimed in any of the preceding claims, wherein the transfer unit (2) comprises at least one shuttle arranged to move between a reception position and at least one delivery position, wherein the industrial robots, or the groups of the industrial robots, pick the blank from the shuttle in a delivery position in order to place it on a stacking support.

14. A blanking line as claimed in claim 13, wherein the transfer unit (2) comprises a shuttle with a dimension that is suitable for two blanks, that may move between two positions, such that in each of said two positions one blank is received on the shuttle while another blank is picked from the shuttle by a robot or group of robots.

15. A method for stacking blanks wherein the line outputs a plurality of blanks of the same size, one following the other, at an output rate, comprising:
• providing at least two industrial robots (5a, 5b, 5c, 5d), and control means to operate the robots (5a, 5b, 5c, 5d) to pick blanks (1) outputted from the line and place them on at least one stack; and
• adapting said control means to operate the robots (5a, 5b, 5c, 5d) either in individual operating mode or in joint operating mode for all the blanks of the plurality of blanks of the same size outputted one following the other, depending on a parameter related to the size of the blanks of the plurality of blanks, the weight of the blanks of the plurality of blanks, the transport rate of the blanks of the plurality of blanks along a transport path, and/or a combination thereof, wherein
• in the individual operating mode each robot grips and picks a blank outputted from the line in order to place it on a stack,
• in the joint operating mode a group of said robots act simultaneously to grip and pick one and the same blank outputted from the line in order to place it on a stack,
**characterized in that** the blanks are outputted from a blanking shear or press.

## Patentansprüche

1. Eine Stanzstraße umfassend ein Stapelanlagesystem zum Stapeln der Zuschnitte, die durch die Stanzstraße produziert werden, wobei die Straße eine Vielzahl von Zuschnitten der gleichen Größe nach einander bei einer Produktionsgeschwindigkeit produziert, wobei das Stapelanlagesystem folgendes umfasst
• eine Übergabeeinheit (2) zum Empfang von in der Straße produzierten Zuschnitten (1);
• mindestens eine Stapelunterlage (3) zum Stapeln von Zuschnitten darauf; und
• mindestens zwei Industrieroboter (5a, 5b, 5c, 5d),
• wobei die Roboter (5a, 5b, 5c, 5d) bezüglich der Übergabeeinheit (2) so angeordnet sind, dass sie in mindestens
• einem Einzelbetriebsmodus betrieben werden können, in dem jeder Roboter einen Zuschnitt aus der Übergabeeinheit (2) nimmt, um ihn auf eine Stapelunterlage (3) zu setzen, und
• in einem gemeinsamen Betriebsmodus betrieben werden können, in dem eine Gruppe von mindestens zwei von den Robotern gleichzeitig auf einen und den selben Zuschnitt wirken, um ihn aus der Übergabeeinheit (2) zu nehmen, um ihn auf eine Stapelunterlage (3) zu setzen,
• und wobei das Stapelanlagesystem ein Robotersteuermittel umfasst, das angepasst ist zum Betrieb der Industrieroboter (5a, 5b, 5c, 5d) entweder im Einzelbetriebsmodus oder im gemeinsamen Betriebsmodus für alle Zuschnitte der Vielzahl von nacheinander produzierten Zuschnitten der gleichen Größe in Abhängigkeit von einem Parameter bezogen auf die Größe der Zuschnitte der Vielzahl von Zuschnitten, das Gewicht der Zuschnitte der Vielzahl von Zuschnitten, die Produktionsgeschwindigkeit der Zuschnitte der Vielzahl von Zuschnitten aus der Stanzstraße, und/oder eine Kombination davon,
**dadurch gekennzeichnet, dass** die Stanzstraße eine Stanzschere oder eine Stanzpresse zum Schneiden von Metall aus einer Rolle umfasst und das Stapelanlagesystem angrenzend an und am Ausgang von der Stanzschere bzw. Stanzpresse angeordnet ist.

2. Eine Stanzstraße wie in Anspruch 1 beansprucht, wobei mindestens ein Teil der Industrieroboter (5a, 5b, 5c, 5d) Manipulatoren mit paralleler Kinematik umfassen, die jeweils ein erstes stationäres Element, ein zweites bewegliches Element und mindestens drei Arme umfassen, wobei jeder Arm einen ersten Armteil, der durch einen Antriebsmittel betätigt wird, und einen zweiten Armteil umfasst, wobei Letzterer eine mit dem beweglichen Element verbundene Gliedanordnung umfasst.

3. Eine Stanzstraße wie in Anspruch 2 beansprucht, wobei in mindestens einem Teil der Manipulatoren mit paralleler Kinematik das erste stationäre Element parallele Schienen (62) umfasst und das zweite bewegliche Element eine Handgelenkhalterung (63) umfasst, wobei jeder Arm einen entlang einer der Schienen verschiebbaren Schlitten und ein zwischen dem Schlitten und der Handgelenkhalterung (63) angeschlossenes Gliedelement umfasst.

4. Eine Stanzstraße wie in Anspruch 2 oder 3 beansprucht, wobei in mindestens einem Teil der Manipulatoren mit paralleler Kinematik das erste stationäre Element mindestens eine Achse umfasst und das zweite bewegliche Element eine Handgelenkhalterung (63) umfasst, wobei jeder Arm einen um eine Achse des ersten stationären Elements herum drehbaren ersten Armteil und ein zwischen dem ersten Armteil und der Handgelenkhalterung (63) angeschlossenes Gliedelement umfasst.

5. Eine Stanzstraße wie in einem der vorhergehenden Ansprüche beansprucht, wobei mindestens ein Teil der Roboter dachmontiert sind und im Wesentlichen oberhalb der Übergabeeinheit (2) angeordnet sind, und wobei die Übergabeeinheit (2) die Zuschnitte aus einer Empfangsposition entlang eines Beförderungswegs befördert, wobei die Roboter oberhalb des Beförderungswegs, im Wesentlichen fluchtend mit diesem, angeordnet sind.

6. Eine Stanzstraße wie in einem der Ansprüche 1 bis 5 beansprucht, umfassend mindestens vier Industrieroboter, mindestens zwei, die an einer Seite der Übergabeeinheit (2) angeordnet sind und mindestens zwei, die an der anderen Seite der Übergabeeinheit (2) angeordnet sind, wobei ein Paar von Robotern an der gleichen Seite der Übergabeeinheit (2) zusammen im gemeinsamen Betriebsmodus betriebt werden können.

7. Eine Stanzstraße wie in einem der vorhergehenden Ansprüche beansprucht, umfassend zwei Stapelunterlagen, die mit jedem Roboter verknüpft sind, wenn die Roboter zum Betrieb im Einzelbetriebsmodus eingestellt sind, wobei die Roboter und die Stapelunterlagen so angeordnet sind, dass jeder Roboter Zuschnitte auf jede seiner zwei mit ihm verknüpften Stapelunterlagen setzen kann.

8. Eine Stanzstraße wie in einem der Ansprüche 1 bis 6 beansprucht, umfassend zwei Stapelunterlagen, die von mindestens zwei Roboter geteilt werden, wenn die Roboter zum Betrieb im Einzelbetriebsmodus so eingestellt sind, dass jeder Roboter Zuschnitte auf beiden Stapelunterlagen setzen kann.

9. Eine Stanzstraße wie in einem der vorhergehenden Ansprüche beansprucht, umfassend zwei Stapelunterlagen, die mit jeder Gruppe von Robotern verknüpft sind, wenn die Roboter zum Betrieb im gemeinsamen Betriebsmodus eingestellt sind, wobei die Roboter und die Stapelunterlagen so angeordnet sind, dass jede Gruppe von Robotern Zuschnitte auf jede seiner zwei mit ihm verknüpften Stapelunterlagen setzen kann.

10. Eine Stanzstraße wie in einem der vorhergehenden Ansprüche beansprucht, wobei die Übergabeeinheit (2) einen linearen Förderer umfasst, der angeordnet ist, um die Zuschnitte entlang eines Beförderungswegs zu befördern, so dass jeder Industrieroboter, oder jede Gruppe der Industrieroboter, den Zuschnitt aus dem linearen Förderer an einer Stelle entlang des Beförderungswegs nimmt, um ihn auf eine Stapelunterlage zu setzen.

11. Eine Stanzstraße wie in einem der vorhergehenden Ansprüche beansprucht, wobei die Übergabeeinheit (2) eine stationäre Oberfläche umfasst.

12. Eine Stanzstraße wie in einem der vorhergehenden Ansprüche beansprucht, wobei die Übergabeeinheit (2) zwei Empfangsroboter umfasst, wobei jeder Empfangsroboter angeordnet ist, um sich von einer gemeinsamen Empfangsposition, in der er einen Zuschnitt aus der Stanzschere oder Stanzpresse empfängt, bis zu mindestens einer Abgabeposition zu bewegen, in der einer der Industrieroboter, oder eine Gruppe der Industrieroboter, den Zuschnitt aus dem Empfangsroboter nimmt, um ihn auf eine Stapelunterlage zu setzen, wobei die Abgabepositionen der zwei Empfangsroboter verschieden voneinander sind.

13. Eine Stanzstraße wie in einem der vorhergehenden Ansprüche beansprucht, wobei die Übergabeeinheit (2) mindestens einen Pendelförderer umfasst, der angeordnet ist, um sich zwischen einer Empfangsposition und mindestens einer Abgabeposition zu bewegen, wobei die Industrieroboter, oder die Gruppen der Industrieroboter, den Zuschnitt aus dem Pendelförderer in einer Abgabeposition nehmen, um ihn auf eine Stapelunterlage zu setzen.

14. Eine Stanzstraße wie in Anspruch 13 beansprucht, wobei die Übergabeeinheit (2) einen Pendelförderer mit einer für zwei Zuschnitte geeigneten Größe umfasst, der sich zwischen zwei Positionen bewegen kann, so dass ein Zuschnitt in jeder von den zwei Positionen auf den Pendelförderer empfangen wird, während ein anderer Zuschnitt aus dem Pendelförderer durch einen Roboter oder eine Gruppe von Robotern genommen wird.

15. Ein Verfahren zum Stanzen von Zuschnitten, wobei die Straße eine Vielzahl von Zuschnitten der gleichen Größe nacheinander bei einer Produktionsgeschwindigkeit produziert, umfassend:
• das Bereitstellen von mindestens zwei Industrierobotern (5a, 5b, 5c, 5d) und einem Steuermittel zum Betrieb der Roboter (5a, 5b, 5c, 5d), um Zuschnitte (1) zu nehmen, die in der Straße produziert werden und sie auf mindestens einen Stapel zu setzen; und
• das Anpassen des Steuermittels zum Betrieb der Roboter (5a, 5b, 5c, 5d) entweder im Einzelbetriebsmodus oder im gemeinsamen Betriebsmodus für alle Zuschnitte der Vielzahl von nacheinander produzierten Zuschnitten der gleichen Größe in Abhängigkeit von einem Parameter bezogen auf die Größe der Zuschnitte der Vielzahl von Zuschnitten, das Gewicht der Zuschnitte der Vielzahl von Zuschnitten, die Beförderungsgeschwindigkeit der Zuschnitte der Vielzahl von Zuschnitten entlang eines Beförderungswegs, und/oder eine Kombination davon, wobei
• jeder Roboter im Einzelbetriebsmodus einen in der Straße produzierten Zuschnitt greift und nimmt, um ihn auf einen Stapel zu setzen,
• eine Gruppe der Roboter im gemeinsamen Betriebsmodus gleichzeitig wirken, um einen und den selben in der Straße produzierten Zuschnitt zu greifen und zu nehmen, um ihn auf einen Stapel zu setzen,
**dadurch gekennzeichnet, dass** die Zuschnitte durch eine Stanzschere oder Stanzpresse produziert werden.

## Revendications

1. Une ligne de découpage, comprenant un système de ligne d'empilage pour empiler les ébauches produites moyennant la ligne de découpage, où la ligne produit une pluralité d'ébauches de la même taille, les unes après les autres, à une vitesse de production, ledit système de ligne d'empilage comprenant
• une unité de transfert (2) pour recevoir des ébauches (1) produites dans la ligne ;
• au moins un support d'empilage (3) pour empiler les ébauches là-dessus ; et
• au moins deux robots industriels (5a, 5b, 5c, 5d),
• lesdits robots (5a, 5b, 5c, 5d) sont disposés par rapport à l'unité de transfert (2) de façon qu'ils peuvent fonctionner dans au moins
• un mode de fonctionnement individuel dans lequel chaque robot prend une ébauche de l'unité de transfert (2) à fin de la placer sur un support d'empilage (3), et
• un mode de fonctionnement conjoint dans lequel un groupe d'au moins deux desdits robots agissent de façon simultanée sur une seule et même ébauche pour la prendre de l'unité de transfert (2) à fin de la placer sur un support d'empilage (3),
• et ledit système de ligne d'empilage comprend un moyen de contrôle de robots adapté pour faire fonctionner les robots industriels (5a, 5b, 5c, 5d) bien dans le mode de fonctionnement individuel ou bien dans le mode de fonctionnement conjoint pour toutes les ébauches de la pluralité d'ébauches de la même taille produites les unes après les autres, en fonction d'un paramètre lié à la taille des ébauches de la pluralité d'ébauches, au poids des ébauches de la pluralité d'ébauches, à la vitesse de production des ébauches de la pluralité d'ébauches moyennant la ligne de découpage, et/ou une combinaison de ceux-ci,
**caractérisée en ce que** la ligne de découpage comprend des cisailles ou une presse de découpage pour découper du métal d'une bobine et le système de ligne d'empilage est disposé en position adjacente à et à la sortie des cisailles ou de la presse de découpage.

2. Une ligne de découpage telle que revendiquée dans la revendication 1, dans laquelle au moins une partie des robots industriels (5a, 5b, 5c, 5d) comprennent des manipulateurs à cinématique parallèle comprenant chacun un premier élément stationnaire, un second élément mobile et au moins trois bras, chaque bras comprenant une première partie de bras actionnée par un mécanisme de commande et une seconde partie de bras, cette dernière comprenant une disposition de liaison connectée à l'élément mobile.

3. Une ligne de découpage telle que revendiquée dans la revendication 2, dans laquelle dans au moins une partie des manipulateurs à cinématique parallèle le premier élément stationnaire comprend des rails parallèles (62) et le second élément mobile comprend un support de poignet (63), chaque bras comprenant un chariot déplaçable le long d'un des rails et un élément de liaison connecté entre le chariot et le support de poignet (63).

4. Une ligne de découpage telle que revendiquée dans les revendications 2 ou 3, dans laquelle dans au moins une partie des manipulateurs à cinématique parallèle le premier élément stationnaire comprend au moins un axe et le second élément mobile comprend un support de poignet (63), chaque bras comprenant une première partie de bras qui peut pivoter autour d'un axe du premier élément stationnaire et un élément de liaison connecté entre la première partie de bras et le support de poignet (63).

5. Une ligne de découpage telle que revendiquée dans l'une quelconque des revendications précédentes, dans laquelle au moins une partie des robots sont montés sur le toit et disposés essentiellement au-dessus de l'unité de transfert (2), et dans laquelle l'unité de transfert (2) transporte les ébauches d'une position de réception le long d'un chemin de transport, les robots étant disposés au-dessus dudit chemin de transport, essentiellement alignés avec celui-ci.

6. Une ligne de découpage telle que revendiquée dans l'une quelconque des revendications 1 à 5, comprenant au moins quatre robots industriels, au moins deux disposés d'un côté de l'unité de transfert (2) et au moins deux disposés de l'autre côté de l'unité de transfert (2), dans laquelle une paire de robots du même côté de l'unité de transfert (2) peuvent fonctionner ensemble dans le mode de fonctionnement conjoint.

7. Une ligne de découpage telle que revendiquée dans l'une quelconque des revendications précédentes, comprenant deux supports d'empilage liés à chaque robot lorsque lesdits robots sont ajustés pour fonctionner dans le mode de fonctionnement individuel, les robots et les supports d'empilage étant disposés de façon que chaque robot peut placer des ébauches sur chacun de ses deux supports d'empilage associés.

8. Une ligne de découpage telle que revendiquée dans l'une quelconque des revendications 1 à 6, comprenant deux supports d'empilage partagés par au moins deux robots lorsque lesdits robots sont ajustés pour fonctionner dans le mode de fonctionnement individuel, de façon que chaque robot peut placer des ébauches sur tous deux supports d'empilage.

9. Une ligne de découpage telle que revendiquée dans l'une quelconque des revendications précédentes, comprenant deux supports d'empilage liés à chaque groupe de robots lorsque lesdits robots sont ajustés pour fonctionner dans le mode de fonctionnement conjoint, les robots et les supports d'empilage étant disposés de façon que chaque groupe de robots peut placer des ébauches sur chacun de ses deux supports d'empilage associés.

10. Une ligne de découpage telle que revendiquée dans l'une quelconque des revendications précédentes, dans laquelle l'unité de transfert (2) comprend un transporteur linéaire disposé pour transporter les ébauches le long d'un chemin de transport de façon que chacun des robots industriels, ou chaque groupe des robots industriels, prend l'ébauche du transporteur linéaire dans une position le long du chemin de transport, afin de la placer sur un support d'empilage.

11. Une ligne de découpage telle que revendiquée dans l'une quelconque des revendications précédentes, dans laquelle l'unité de transfert (2) comprend une surface stationnaire.

12. Une ligne de découpage telle que revendiquée dans l'une quelconque des revendications précédentes, dans laquelle l'unité de transfert (2) comprend deux robots de réception, chaque robot de réception étant disposé pour se déplacer d'une position de réception commune, où il reçoit une ébauche des cisailles ou de la presse de découpage, à au moins une position de remise, où un des robots industriels, ou un groupe des robots industriels, prend l'ébauche du robot de réception afin de la placer sur un support d'empilage, les positions de remise des deux robots de réception étant différentes.

13. Une ligne de découpage telle que revendiquée dans l'une quelconque des revendications précédentes, dans laquelle l'unité de transfert (2) comprend au moins un transporteur-navette disposé pour se déplacer entre une position de réception et au moins une position de remise, dans laquelle les robots industriels, ou les groupes des robots industriels, prennent l'ébauche du transporteur-navette dans une position de remise afin de la placer sur un support d'empilage.

14. Une ligne de découpage telle que revendiquée dans la revendication 13, dans laquelle l'unité de transfert (2) comprend un transporteur-navette avec une dimension qui est appropriée pour deux ébauches, qui peut se déplacer entre deux positions, de façon que dans chacune desdites deux positions, une ébauche est reçue sur le transporteur-navette alors que l'autre ébauche est prise par un robot ou groupe de robots du transporteur-navette.

15. Un procédé d'empilage d'ébauches, dans lequel la ligne produit une pluralité d'ébauches de la même taille, les unes après les autres, à une vitesse de production, comprenant :
• fournir au moins deux robots industriels (5a, 5b, 5c, 5d) et un moyen de contrôle pour faire fonctionner les robots (5a, 5b, 5c, 5d) pour prendre des ébauches (1) produites dans la ligne et les placer sur au moins une pile ; et
• adapter ledit moyen de contrôle pour faire fonctionner les robots (5a, 5b, 5c, 5d) bien dans le mode de fonctionnement individuel ou bien dans le mode de fonctionnement conjoint pour toutes les ébauches de la pluralité d'ébauches de la même taille produites les unes après les autres, en fonction d'un paramètre lié à la taille des ébauches de la pluralité d'ébauches, au poids des ébauches de la pluralité d'ébauches, à la vitesse de transport des ébauches de la pluralité d'ébauches le long d'un chemin de transport, et/ou une combinaison de ceux-ci, dans lequel
• dans le mode de fonctionnement individuel chaque robot saisit et prend une ébauche produite dans la ligne afin de la placer sur une pile,
• dans le mode de fonctionnement conjoint un groupe desdits robots agissent de façon simultanée pour saisir et prendre une seule et même ébauche produite dans la ligne afin de la placer sur une pile,
**caractérisé en ce que** les ébauches sont produites moyennant des cisailles ou moyennant une presse de découpage.
